## Europäisches Patentamt
## European Patent Office
## Office européen des brevets

(19)

(11) Veröffentlichungsnummer: **0 256 374**
**B1**

(12)

# EUROPÄISCHE PATENTSCHRIFT

(45) Veröffentlichungstag der Patentschrift:
**17.05.89**

(51) Int. Cl.⁴: **B64C 5/06**, B64C 9/00

(21) Anmeldenummer: **87110966.6**

(22) Anmeldetag: **29.07.87**

(54) **Seitenleitwerk für Flugzeuge mit spreizbaren Ruderklappen.**

(30) Priorität: **05.08.86 DE 3626432**

(43) Veröffentlichungstag der Anmeldung:
**24.02.88 Patentblatt 88/8**

(45) Bekanntmachung des Hinweises auf die Patenterteilung:
**17.05.89 Patentblatt 89/20**

(84) Benannte Vertragsstaaten:
**FR GB NL**

(56) Entgegenhaltungen:
**FR-E- 69 844**
**US-A- 2 347 230**
**US-A- 2 643 833**

(73) Patentinhaber: **Deutsche Forschungs- und Versuchsanstalt für Luft- und Raumfahrt e.V., Linder Höhe Postfach 90 60 58, D-5000 Köln 90(DE)**

(72) Erfinder: **Quast, Armin, Dipl.-Ing., Am Meinefeld 16, D-3300 Braunschweig(DE)**

(74) Vertreter: **Gralfs, Harro, Dipl.-Ing., Am Bürgerpark 8, D-3300 Braunschweig(DE)**

**Beschreibung**

Die Erfindung bezieht sich auf ein Seitenleitwerk für Flugzeuge mit einer Flosse mit symmetrischem Profil und zwei symmetrisch zur Profilachse der Flosse angeordneten, spreizbaren Ruderklappen im hinteren Bereich der Flosse.

Bei einem bekannten Seitenleitwerk der genannten Art (US-PS 26 43 833) sind die Ruderklappen in üblicher Weise im hinteren Bereich der Flosse schwenkbar angeordnet. Um Ruderausschläge zu bewirken, werden hierbei beide Ruderklappen gemeinsam geschwenkt. Es ist dabei aber auch eine Ausführungsform bekannt, bei der lediglich eine der Ruderklappen geschwenkt wird, wobei die geschwenkte Ruderklappe einen sich beim Schwenken öffnenden Spalt aufweist, der jedoch zu keinem wesentlichen aerodynamischen Wirkungen führt. Hinweise auf eine Verbesserung dieser Wirkungen sind nicht enthalten.

Die Größe von Seitenleitwerken bei mehrmotorigen Flugzeugen wird bestimmt durch die Bedingungen, die durch eine Seitenwindlandung oder durch den Ausfall eines Motors bei Start oder Landung gegeben sind. Um die beim Motorausfall und Seitenwind erforderliche Seitenleitwerkskraft S zu erzeugen, muß die Fläche $F_s$ für das Seitenleitwerk der Beziehung

$$S = c_{ao} \cdot F_s \cdot q$$

genügen. Dabei ist q der Staudruck und $c_{ao}$ der Auftriebsbeiwert des Seitenleitwerkes.

Der maximale Auftriebsbeiwert $c_{ao\ max}$ eines symmetrischen Flossenprofils mit einer an der Hinterkante der Flosse schwenkbar angelenkten Wölbklappe beträgt ungefähr 1,0. Ein entsprechender Auftriebsbeiwert ist auch bei einem gattungsgemäßen Seitenleitwerk mit Spreizklappen zu erwarten.

Aus den genannten Gründen beträgt die Seitenleitwerksfläche bei mehrmotorigen Verkehrsflugzeugen etwa 20 % der Flügelfläche. Wegen des niedrigen Staudrucks ist die Seitenleitwerksfläche bei STOL-Flugzeugen sogar noch größer. Die große Seitenleitwerksfläche ist im Reiseflug nicht erforderlich. Sie verursacht als Teil der bespülten Oberfläche des Flugzeuges Widerstände, die auf den Treibstoffverbrauch im Reiseflug einen negativen Einfluß haben.

Bei der Ausbildung von Seitenleitwerken mit einer sogenannten Morelli-Klappe, die als Spaltklappe wirksam ist, ist zwar ein um –40 % erhöhter Auftriebsbeiwert erreichbar. Die Morelli-Klappe hat jedoch den Nachteil, daß der Widerstand bei Klappenausschlag 0, d.h. für den Reiseflug, um etwa 20 % höher ist als der eines konventionellen Seitenleitwerkes mit Wölbungsklappe. Die durch die Morelli-Klappe mögliche Verkleinerung der Seitenleitwerksfläche wird damit durch die Erhöhung des Widerstandes im Reiseflug überkompensiert.

Aufgabe der Erfindung ist ein Seitenleitwerk mit spreizbaren Ruderklappen so auszubilden, daß bei wesentlich kleinerer umströmter Fläche den Anforderungen bei Seitenwindlandungen und einseitigem Motorausfall genügt werden kann.

Diese Aufgabe wird gemäß der Erfindung bei einem Seitenleitwerk nach dem Oberbegriff des Patentanspruches 1 dadurch gelöst, daß die Ruderklappen als Fowler-Klappen ausgebildet sind.

Zweckmäßige Ausgestaltungen sind Gegenstand der Unteransprüche.

Die Erfindung ist in der Zeichnung beispielsweise veranschaulicht und im nachstehenden im einzelnen anhand der Zeichnung beschrieben.

Fig. 1 zeigt in Seitenansicht das Heck eines Flugzeuges mit einem Seitenleitwerk mit Ruderklappen gemäß der Erfindung.

Fig. 2 zeigt einen Schnitt etwa längs der Linie II-II in Fig. 1.

Fig. 3 bis 6 zeigen verschiedene Ausfahrzustände der Fowler-Klappen des Seitenleitwerks nach Fig. 2.

Fig. 7 und 8 zeigen im Querschnitt durch ein Seitenleitwerk in zwei weiteren Ausführungsformen ausfahrbare Fowler-Klappen.

Fig. 9 zeigt eine Ausführungsform mit als Doppelspaltklappen ausgebildeten Fowler-Klappen.

Fig. 10 zeigt eine Ausführungsform ähnlich Fig. 7 mit Ruderbetätigung für den Reiseflug.

Fig. 11 zeigt die Nutzung der Fowler-Klappen als Luftbremse.

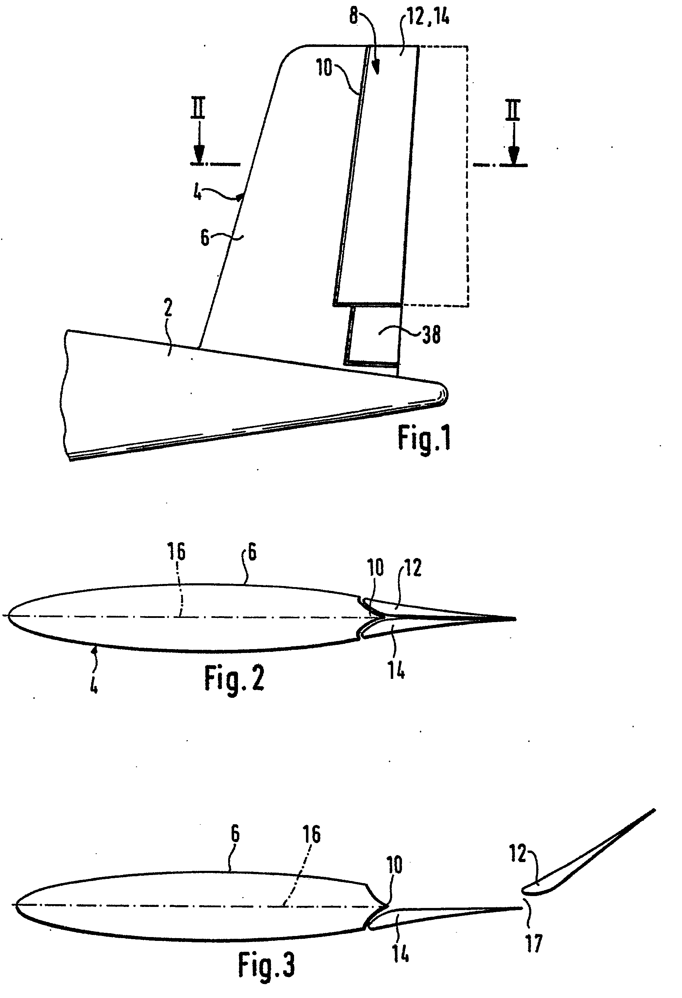

In Fig. 1 ist das Heck 2 eines Flugzeuges mit darauf angeordnetem Seitenleitwerk 4 mit einer feststehenden Flosse 6 und einem Seitenruder 8 wiedergegeben, das, wie weiter unten im einzelnen zu beschreiben sein wird, aus zwei wechselweise ausfahrbaren Fowler-Klappen besteht, wobei die ausgefahrene Stellung in Fig. 1 gestrichelt dargestellt ist. Unterhalb der Fowler-Klappen ist an der Rückseite 10 der Flosse ein in üblicher Weise als Wölbungs-klappe ausgebildetes Seitenruder 38 für den Reiseflug dargestellt, auf das weiter unten eingegangen werden wird. Dieses Seitenruder erstreckt sich über einen begrenzten Teil der Höhe der Flosse 6 des Seitenleitwerks 4.

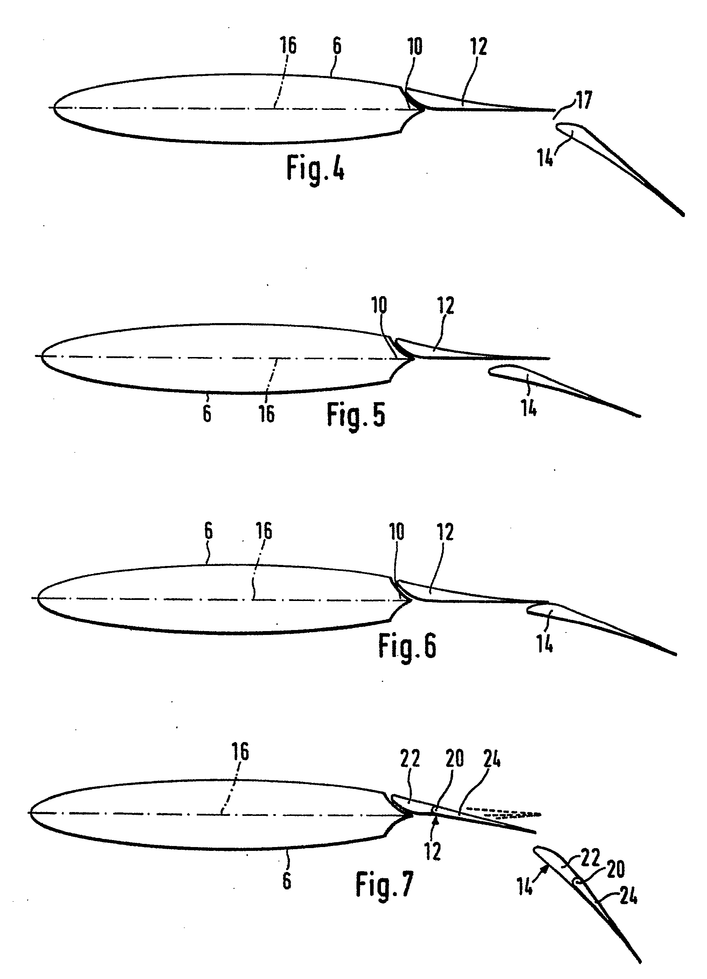

Wie in Fig. 2 dargestellt, sind an der Hinterkante 10 der feststehenden Flosse 6 des Seitenleitwerks 4 zwei Fowler-Klappen 12, 14 angeordnet, die symmetrisch zur Mittellinie 16 des symmetrischen Profils der Flosse 6 angeordnet sind. An der Hinterkante 10 der Flosse 6 können angepaßte Aufnahmeräume für die Profilnasen der Profile der Fowler-Klappen vorgesehen sein. Für die Fowler-Klappen sind in der Flosse Betätigungsmittel angeordnet, mit denen die Fowler-Klappen wechselweise von der Flosse 6 aus nach hinten ausfahrbar sind, wobei in üblicher Weise gleichzeitig eine Schwenkung der Fowler-Klappe erfolgt. Der Antrieb ist in der Zeichnung nicht wiedergegeben. Er kann ähnlich ausgebildet sein wie der Antrieb für Fowler-Klappen an den Hinterkanten der mit einem unsymmetrischen Profil versehenen Tragflügel eines Flugzeuges. Wie aus den Fig. 3 und 4 ersichtlich, wird durch das vollständige Ausfahren der Fowler-Klappen die Profiltiefe des Seitenleitwerks um die Profiltiefe der Fowler-Klappen vergrößert, während gleichzeitig eine Erhöhung der Profilwölbung und damit des Auftriebsbeiwertes des Seitenleitwerkprofils erreicht wird. Zwischen der jeweils voll ausgefahrenen Fowler-Klappen 12 bzw. 14 und der stehengebliebenen Fowler-Klappe 14 bzw. 12 befindet sich ein Spalt 17, wie er für Fowler-Klappen typisch ist.

Während die Fig. 3 und 4 die vollständige oder extreme Ausfahrstellung der beiden Fowler-Klappen zeigen, ist in Fig. 5 und 6 jeweils die Fowler-Klappe 14 in zwei Zwischenstellungen dargestellt, die von den Klappen eingenommen werden können, wenn kein voller Ruderausschlag erforderlich ist.

Mit der beschriebenen Ausbildung der Ruderklappen des Seitenleitwerks als ausfahrbare Fowler-Klappen lassen sich für das Seitenleitwerk Auftriebsbeiwerte von

$c_{ao\,max} = 2,2$ ($\eta_K = 40°$)

erzielen. $\eta_K$ = Klappenausschlagwinkel.

Dieser Auftriebsbeiwert ist mehr als der doppelte Wert, der mit einem konventionellen Seitenleitwerk mit einer üblichen Wölbungsklappe erreichbar ist. Es läßt sich damit mindestens eine Halbierung der Seitenleitwerksfläche erreichen und damit deren Flächenanteil von 20 % der Flügelfläche auf 10 % der Flügelfläche herabsetzen mit einer entsprechenden Verringerung der bespülten Oberfläche des Flugzeuges. Dies führt zu einer Verringerung des Widerstandes, der eine Brennstoffeinsparung in der Größenordnung von 3 % erwärten läßt. Die Wirksamkeit des Seitenleitwerks nach Fig. 2 bis 6 läßt sich weiter verbessern durch Ausführungsformen die in den Fig. 7 bis 9 dargestellt sind.

Nach Fig. 7 bestehen die Fowler-Klappen 12, 14 jeweils aus zwei über ein Gelenk 20 miteinander verbundenen Klappenteilen 22, 24 unterteilt. Das Gelenk 20 erstreckt sich hierbei in Spannweitenrichtung. Bei dieser Ausführung kann der hintere Klappenteil 24 wie ein Wölbklappe gegenüber dem vorderen Klappenteil 22 geschwenkt werden. Damit läßt sich ein höherer Ausschlagwinkel für die ausgefahrene Fowler-Klappe 26 und damit eine vergrößerte Profilwölbung mit entsprechendem Auftriebsgewinn erreichen.

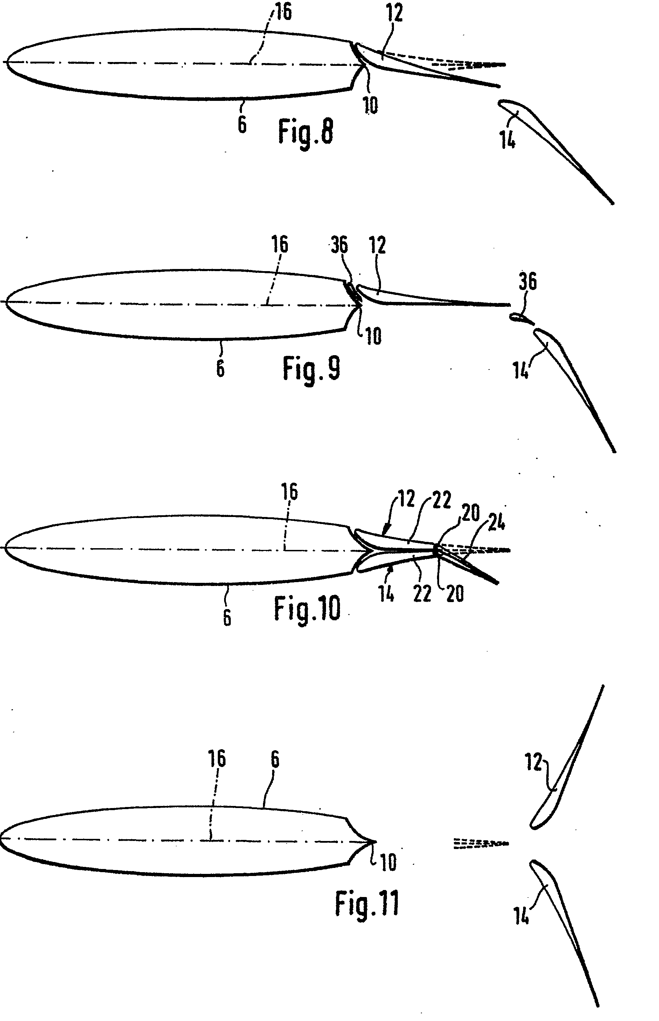

Eine einfachere Ausführungsform, mit der eine Vergrößerung der Profilwölbung erreichbar ist, ist in Fig. 8 dargestellt. Hier sind die, wie in den Fig. 2 bis 6 einteilig ausgebildeten Fowler-Klappen 12, 14 zusätlich im Bereich der Profilnase der Fowler-Klappen im Bereich der Hinterkante der Flosse 6 über die Symmetrieachse 16 des Seitenleitwerkes hinaus schwenkbar. Beim Ausfahren der einen Klappe 14 wird hierbei die Klappe 12 über die Symmetrieachse 16 des Seitenleitwerks hinaus geschwenkt, wodurch wiederum die Profilwölbung vergrößert wird.

Durch die bei den Ausführungsformen nach den Fig. 7 und 8 erreichte Asymmetrie des gesamten Profils sind wiederum etwas höhere Auftriebsbeiwerte als bei der Ausführungsform nach den Fig. 2 bis 6 zu erwarten. Realistisch dürfte ein $c_{ao\,max} = 2,4$ sein.

In Fig. 9 ist eine Ausbildung der Fowler-Klappen 12, 14 als Doppelspaltklappe mit der Zwischenklappe 36 gezeigt, die bei voll ausgefahrener Fowler-Klappe 14 hinter dem Profilende der nicht ausgefahrenen Fowler-Klappe 12 liegt. Mit einer solchen Ausführungsform dürfte eine weitere Erhöhung des Auftriebsbeiwertes bis auf $c_{ao\,max} = 3$ zu erwarten sein, die wiederum eine deutliche Verringerung der Seitenleitwerkfläche, gegenüber der mit der Ausführungsform nach den Fig. 2 bis 6 erreichbaren, möglich erscheinen läßt.

Die als Ruderklappen verwendeten Fowler-Klappen können zur Wölbungsüberhöhung schließlich auch noch mit Krüger-Klappen ausgestattet sein.

Die erfindungsgemäße Ausbildung der Ruderklappen als Fowler-Klappen in der oben beschriebenen Weise ermöglicht weiter, das Seitenleitwerk als Luftbremse zu nutzen. Zu diesem Zweck werden beide Fowler-Klappen nach hinten ausgefahren und auf einen maximalen Ausschlagwinkel gebracht, wie dies in Fig. 11 dargestellt ist, in der die Ausbildung der Fowler-Klappen nach den Fig. 2 bis 6 gewählt ist. In ähnlicher Weise lassen sich selbstverständlich auch die Ausführungsformen mit zweiteiliger Fowler-Klappe nach Fig. 7 bzw. mit Doppelspaltklappe nach Fig. 9 als Luftbremse ausnutzen.

Fowler-Klappen erfordern, wie bekannt, erhebliche Stellkräfte. Es sind daher voll-hydraulische Stellantriebe zweckmäßig.

Ein Seitenleitwerk wird im Gegensatz zu einer Tragfläche normalerweise symmetrisch angeströmt. Da die feststehende Flosse mit dem Anstellwinkel $\alpha = 0$ selbst keinen Auftriebsbeiwert hat, resultiert der Auftrieb zur Erzeugung der Seitenkraft an einem Seitenleitwerk allein aus dem Klappenausschlag. Der durch Verstellen der Ruderklappe erzielbare maximale Auftriebsbeiwert ist daher vorstehend als $c_{ao.\,max}$ bezeichnet. Dieser Auftriebsbeiwert vergrößert sich zunächst proportional zum Klappenausschlagwinkel und steigt dann mit beginnender Strömungsablösung immer schwächer an. Er erreicht bei Fowler-Klappen ein Maximum, das erwähnte $c_{ao\,max}$, bei einem Ausschlagwinkel von 30 bis 50°.

Im Reiseflug sind wegen des hohen Staudrucks für Kursänderungen nur sehr geringe Seitenruderausschläge erforderlich. Diese Ruderausschläge können bei der Ausführungsform nach Fig. 7 durch gemeinsames Schwenken der hinteren Profilabschnitte 24 der Fowler-Klappen 12 und 14 durchgeführt werden, wie dies in Fig. 10 dargestellt ist. In diesem Fall arbeitet das Seitenleitwerk die ein konventionelles Seitenleitwerk mit den gemeinsam als Wölbungsklappe wirksamen Profilabschnitten 24 der Fowler-Klappen nach Fig. 7 als Ruderklappe.

Es ist auch möglich, wie in Fig. 1 dargestellt, beispielsweise im unteren Bereich des Seitenleitwerks 4 unterhalb der als Fowler-Klappen 12, 14 ausgebildeten Ruderklappen eine sich über einen geringen Teil der Spannweite des Seitenleitwerks erstreckende Wölbungsklappe 36 vorzusehen, deren Fläche nach den Erfordernissen des Reiseflugs gewählt ist.

Große Seitenleitwerksflächen stabilisieren das Flugzeug im Reiseflug. Die durch Verwendung von Fowler-Klappen als Ruder mögliche Reduzierung der Seitenleitwerksfläche beeinträchtigt die Stabilität des Flugzeuges. Dies gilt insbesondere hinsichtlich der Gier- oder Taumelschwingung (dutch-roll) im Reiseflug. Diese Taumelschwingung ist im allgemeinen nicht gefährlich, beeinträchtigt aber den Pas-

sagierkomfort. Bei heutigen Verkehrsflugzeugen mit konventionellen Seitenleitwerken werden solche Taumelschwingungen durch eine künstliche Stabilisierung mittels sogenannter Gier- dämpfer beseitigt. Für derartige Gierdämpfer reichen kleine Klappenflächen aus.

Zur Dämpfung der Taumelschwingungen werden kleine, aber präzise Seitenruderausschläge benötigt. Prinzipiell könnten die erforderlichen kleinen Änderungen der Auftriebsbeiwerte durch teilweises Ausfahren der Fowler-Klappen erfolgen. Zweckmäßig erscheint es jedoch, auch hierfür besondere Steuerflächen vorzusehen, also beispielsweise die oben beschriebene spezielle Reiseflugruderklappe 38. Es könnten auch andere Steuerflächen vorgesehen sein, die automatisch von einem Regler angesteuert würden und auf die der Pilot damit keinen Einfluß hat.

Kleine Steuerflächen für kleine Kräfte sind stets günstig, weil dann weniger Probleme mit dem Spiel und der Wirksamkeit um die Neutralstellung auftreten.

## Patentansprüche

1. Seitenleitwerk für Flugzeuge mit einer Flosse (6) mit symmetrischem Profil und zwei symmetrisch zur Profilachse der Flosse angeordnet, spreizbaren Ruderklappen (12, 14) im hinteren Bereich der Flosse, dadurch gekennzeichnet, daß die Ruderklappen als Fowler-Klappen (12,14) ausgebildet sind.

2. Seitenleitwerk nach Anspruch 1, dadurch gekennzeichnet, daß die Fowler-Klappen (12,14) aus zwei gelenkig miteinander verbundenen Teilen (22, 24) bestehen.

3. Seitenleitwerk nach Anspruch 2, dadurch gekennzeichnet, daß die hinteren Abschnitte (24) der Fowler-Klappen (12,14) gleichsinnig schwenkbar sind.

4. Seitenleitwerk nach Anspruch 1, dadurch gekennzeichnet, daß die Fowler-Klappen (12,14) in der eingefahrenen Stellung über die Symmetrieachse (16) der Flosse (6) hinaus schwenkbar sind.

5. Seitenleitwerk nach Anspruch 1, dadurch gekennzeichnet, daß die Fowler-Klappen (12,14) als Doppelspaltklappen ausgebildet sind.

6. Seitenleitwerk nach einem der vorhergehenden Ansprüche, dadurch gekennzeichnet, daß die Fowler-Klappen (12,14) mit Krüger-Klappen zur Wölbungserhöhung versehen sind.

7. Seitenleitwerk nach einem der vorhergehenden Ansprüche, dadurch gekennzeichnet, daß das Seitenleitwerk (4) über einen Teil der Höhe der Flosse (6) mit einer daran angelenkten Wölbungsklappe (38) ausgebildet ist.

## Claims

1. A rudder assembly for aircraft, having a fin (6) with a symmetrical profile and two extensible control-surface flaps (12, 14) disposed symmetrically to the profile axis of the fin, in the rear region of the fin, characterised in that the control-surface flaps are constructed in the form of Fowler flaps (12, 14).

2. A rudder assembly according to Claim 1, characterised in that the Fowler flaps (12, 14) consist of two parts (22, 24) articulately connected to one another.

3. A rudder assembly according to Claim 2, characterised in that the rear portions (24) of the Fowler flaps (12, 14) are pivotable in the same direction.

4. A rudder assembly according to Claim 1, characterised in that, in the retracted position, the Fowler flaps (12, 14) are pivotable beyond the axis of symmetry (16) of the fin (6).

5. A rudder assembly according to Claim 1, characterised in that the Fowler flaps (12, 14) are constructed in the form of double slotted flaps.

6. A rudder assembly according to any one of the preceding Claims, characterised in that the Fowler flaps (12, 14) are provided with Krüger flaps to increase the camber.

7. A rudder assembly according to any one of the preceding Claims, characterised in that the rudder assembly (4) is constructed over a portion of the height of the fin (6) with a plain flap (38) articulated thereon.

## Revendications

1. Dérive d'avion comportant un empennage (6) à profil symétrique et, dans la zone arrière de celui-ci, deux volets de gouvernail déployables (12, 14) symétriques par rapport à l'axe du profil de l'empennage, caractérisée en ce que les volets de gouvernail sont des volets Fowler (12, 14).

2. Dérive selon la revendication 1, caractérisée en ce que les volets Fowler (12, 14) se composent de deux parties (22, 24) reliées entre elles de manière articulée.

3. Dérive selon la revendication 2, caractérisée en ce que les parties arrière (24) des volets Fowler (12, 14) sont orientables dans le même sens.

4. Dérive selon la revendication 1, caractérisée en ce que les volets Fowler (12, 14) sont, en position rentrée, orientables au-delà de l'axe de symétrie (16) de l'empennage (6).

5. Dérive selon la revendication 1, caractérisée en ce que les volets Fowler (12, 14) sont des volets à double fente.

6. Dérive selon l'une des revendications précédentes, caractérisée en ce que les volets Fowler (12, 14) sont pourvus de volets Krüger pour augmenter la courbure.

7. Dérive selon l'une des revendications précédentes, caractérisée en ce que la dérive (4) est, sur une partie de la hauteur de l'empennage (6), constituée par un volet simple (38), qui y est articulé.

Fig.1

Fig.2

Fig.3

Fig.4

Fig.5

Fig.6

Fig.7

Fig.8

Fig.9

Fig.10

Fig.11